# EUROPEAN PATENT SPECIFICATION

(11) **EP 2 441 934 B1**
(45) Date of publication and mention of the grant of the patent: **07.12.2016**
(21) Application number: 11184836.2
(22) Date of filing: 12.10.2011
(51) Int. Cl.: F01N 11/00, F01N 9/00, F01N 3/035, F01N 3/025, F01N 3/10

(54) **Exhaust gas purifying apparatus for internal combustion engine**
Abgasreinigungsvorrichtung für einen Verbrennungsmotor
Appareil de purification de gaz d'échappement pour moteur à combustion interne

(30) Priority: 15.10.2010 JP 2010232588
(43) Date of publication of application: 18.04.2012
(73) Proprietor: Kabushiki Kaisha Toyota Jidoshokki, Kariya-shi, Aichi 448-8671 (JP); TOYOTA JIDOSHA KABUSHIKI KAISHA, Toyota-shi, Aichi-ken, 471-8571 (JP)
(72) Inventor: Aoki, Hideki, Kariya-shi,, Aichi 448-8671 (JP); Saoda, Takenori, Toyota-shi,, Aichi 471-8571 (JP)
(74) Representative: TBK

(56) References cited:
- EP-A1- 1 867 854
- EP-A1- 2 187 007
- EP-A2- 1 331 373
- EP-A2- 1 515 015
- JP-A- 2007 064 112
- JP-A- 2008 063 968

## Description

### FIELD OF THE INVENTION

This invention relates to an exhaust gas purification apparatus for an internal combustion engine, according to claim 1, wherein an exhaust purifying catalyst is provided in an exhaust passage for the engine and a fuel adding valve is provided in the exhaust passage on the upstream side of the exhaust purifying catalyst, wherein the exhaust gas purification apparatus includes anti-clog means for performing anti-clog fuel addition for causing the fuel adding valve to inject fuel to prevent clogging of the fuel adding valve.

### BACKGROUND

Generally, an exhaust gas purifying apparatus including an exhaust purifying catalyst and a filter is provided in an exhaust passage for diesel engines. As means for preventing reduction in ability of the exhaust gas purifying apparatus to purify exhaust gas, a fuel adding valve is also provided in the exhaust passage to supply fuel to the exhaust passage.

The fuel adding valve is provided in the exhaust passage so that an injection hole of the valve is exposed in the exhaust passage. Thus, the injection hole of the fuel adding valve is exposed to exhaust gas, and particulate matter contained in the exhaust gas or foreign objects such as fine particles generated at sliding portions of the engine is adhered to and deposited on the injection hole. Then, a foreign object adhered to and deposited on the injection hole is subject to hot exhaust gas and caulked thereby clogging the injection hole of the fuel adding valve. To prevent such clogging of the fuel adding valve, as described in JP 2007 71175 A, a fuel addition (also referred to as "anti-clog fuel addition" hereinafter) is forcibly conducted at the timing except for the time for preventing the reduction in ability to purify exhaust gas in order to decrease the temperature at the tip of the fuel adding valve.

In the fuel addition apparatus of JP 2007 71175 A, when the temperature of the fuel adding valve reaches a predetermined high-temperature area, anti-clog fuel addition is performed to prevent clogging of the injection hole to decrease the temperature at the tip of the fuel adding valve. In JP 2007 71175 A, during the period of the anti-clog fuel addition, instead of adding a predetermined amount of fuel in a normal operation, an appropriate amount of fuel that suits increased temperature at the tip of the fuel adding valve is added by taking into consideration the delay for the increase in temperature to occur at the tip. This alleviates waste of additive amounts of fuel.

The exhaust purifying catalyst is activated at a temperature at or above the activation temperature and shows its ability to treat the fuel while the exhaust purifying catalyst does not show an ability sufficient to treat the fuel when the catalyst does not reach the activation temperature (non-activated state). If anti-clog fuel addition is performed when the exhaust purifying catalyst is in a non-activated state, the unburned fuel that was added adheres to the exhaust purifying catalyst and the activation temperature of the exhaust purifying catalyst is increased. This impairs performance of the exhaust purifying catalyst. However, the fuel addition apparatus of JP 2007 71175 A does not consider the activation status of the exhaust purifying catalyst, and still less teaches or suggests anti-clog fuel addition when the exhaust purifying catalyst has not been activated.

Further exhaust gas purifying apparatuses are known from EP 1 515 015 A2, EP 2 187 007 A1 and JP 2008 063968 A.

### SUMMARY OF THE INVENTION

An object of the invention is to provide an exhaust gas purification apparatus for an internal combustion engine that enables fuel addition for preventing clogging of the fuel adding valve, depending on the activation state of the exhaust purifying catalyst.

The object is achieved with an exhaust gas purifying apparatus having the features of claim 1. Further advantageous developments of the invention are subject-matter of the dependent claims.

### BRIEF DESCRIPTION OF DRAWINGS

Fig. 1(a) is a schematic view illustrating an intake and exhaust system for a diesel engine according to one example;
Fig. 1(b) is a graph illustrating the relationship between frequency (number) of additions and time at the time of anti-clog fuel addition; and
Fig. 2 is a flow chart illustrating a procedure for addition of anti-clog fuel in an electronic control unit.

### DETAILED DESCRIPTION OF THE INVENTION

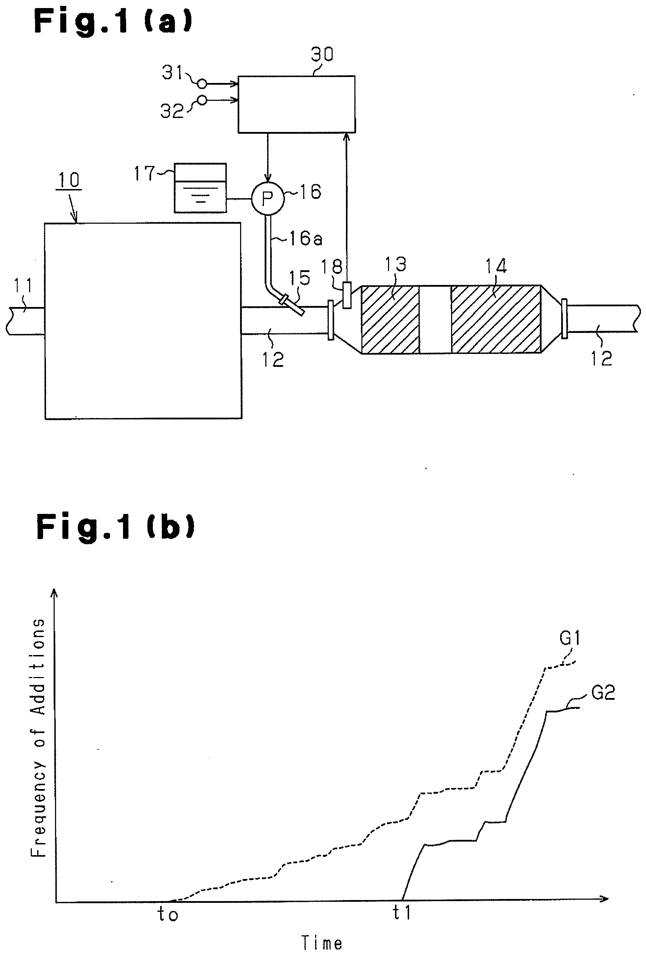

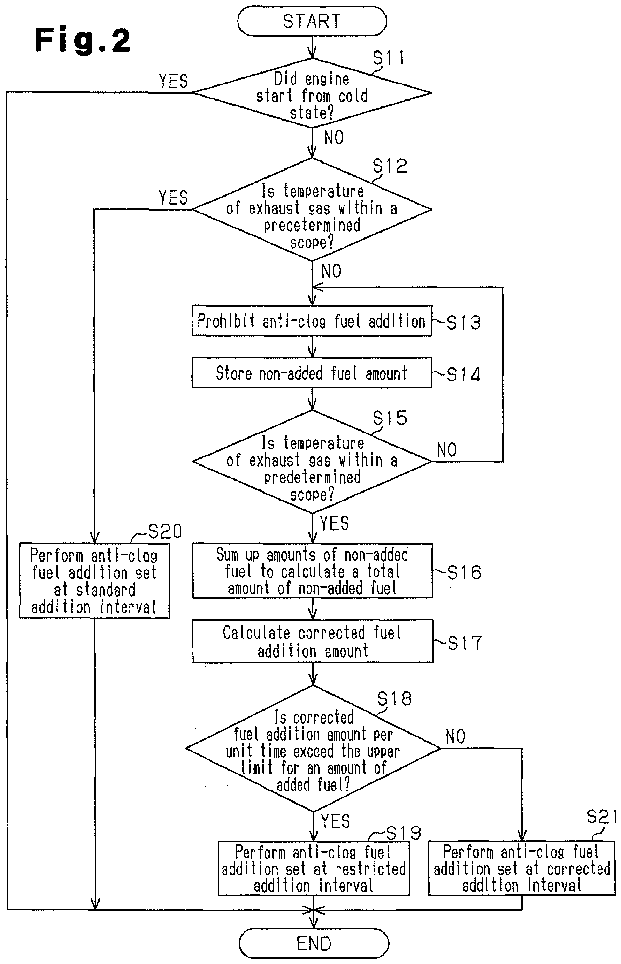

An exhaust gas purification apparatus for the diesel engine (referred to as just "engine" hereinafter) according to one embodiment of the invention will be described with reference to Figs. 1(a), 1(b) and 2.

As illustrated in Fig. 1(a), an intake passage 11 and an exhaust passage 12 are connected with an engine 10 as an internal combustion engine. An oxidation catalyst 13 that serves as an exhaust purifying catalyst is provided in the downstream portion of the exhaust passage 12 and oxidizes hydrocarbon (HC) carbon monoxide (CO) in exhaust gas for purification. A filter 14 is located in the exhaust passage 12 on the downstream side of the oxidation catalyst 13 and collects a particulate matter (PM) in the exhaust gas. The filter 14 is made of porous ceramics, so the PM in the exhaust gas is captured when it passes through the porous walls of the filter 14.

In the filter 14, when a predetermined amount of PM accumulates, a regeneration process to recover the capturing function of the filter 14 is performed by burning and removing the accumulated PM in the filter 14. To burn and remove the PM, the temperature of exhaust gas that passes through the filter 14 need to be set to an appropriate temperature (for example, as high as 650 degree C or higher). To achieve this high temperature, in this embodiment, a fuel adding valve 15 is provided in the exhaust passage 12 on the upstream side of the oxidation catalyst 13. An injection hole (not shown) of the fuel adding valve 15 is exposed in the exhaust passage 12, and fuel adjusted at certain pressure (fuel supply pressure) is added into the exhaust passage 12 via the injection hole. Then, the fuel that was added into the exhaust passage 12 via the fuel adding valve 15 generates heat by oxidation reaction with the oxidation catalyst 13. This heat increases the temperature of exhaust gas, and thus the temperature of exhaust gas on the upstream portion of the filter 14 is increased.

A fuel pump 16 is connected to the fuel adding valve 15 via a fuel passage 16a, and a fuel tank 17 is connected to the fuel pump 16. An exhaust gas temperature sensor 18 is provided in the exhaust passage 12 on the upstream side of the oxidation catalyst 13 and on the downstream side of the fuel adding valve 15.

An electronic control unit 30 that controls the engine 10 comprises a microcomputer including a central processing unit (CPU), a read-only memory (ROM) that stores various programs or maps in advance, a random access memory (RAM) that temporally stores operational results of the CPU, a time counter, an input interface, and an output interface.

A crank angle detector 31, a water temperature sensor 32, and an exhaust gas temperature sensor 18 are signal connected to the electronic control unit 30. The crank angle detector 31 detects a rotational angle (crank angle) of a non-illustrated crank shaft. Information about the crank angle detected by the crank angle detector 31 is sent to the electronic control unit 30. The electronic control unit 30 calculates engine rotational speed based on the information about the crank angle detected by the crank angle detector 31. The water temperature sensor 32 detects the temperature of cooling water for the engine 10. Information about the water temperature detected by the water temperature sensor 32 is sent to the electronic control unit 30. The exhaust gas temperature sensor 18 detects the temperature of atmosphere in the exhaust passage 12 (the temperature of exhaust gas when the exhaust gas flows in the exhaust passage 12) on the upstream side of the oxidation catalyst 13. Information about the temperature detected by the exhaust gas temperature sensor 18 is sent to the electronic control unit 30.

The electronic control unit 30 performs various controls relating to engine control based on the different kinds of information sent from the different sensors as described above. Further, the electronic control unit 30 is electrically connected to a fuel injection nozzle (not shown) of the engine 10, and performs fuel injection timing control and fuel injection amount control by the fuel injection nozzle based on the operation states of the engine 10 that is recognized by the detection results of the above sensors.

In the fuel adding valve 15 for supplying the exhaust passage 12 with fuel to regenerate the filter 14, an injection hole of the fuel adding valve 15 is exposed in the exhaust passage 12 and exposed to exhaust gas. To prevent clogging of the injection hole due to exposure of a foreign object such as PM adhered or deposited on the injection hole at high temperature, the electronic control unit 30 performs anti-clog fuel addition in which the electronic control unit 30 forces the fuel adding valve 15 to inject fuel at the timing other than the time for regenerating of the filter 14 (or preventing a decrease in ability to purify exhaust gas) to decrease the temperature at the distal end of the fuel adding valve 15. With this anti-clog fuel addition, the temperature of the distal end of the fuel adding valve 15 is decreased and generation of caulking due to adherence and deposition of the foreign object is prevented. Thus, clogging of the injection hole is prevented. The electronic control unit 30 of this embodiment serves as anti-clog means for causing the fuel adding valve 15 to inject fuel to prevent clogging of the fuel adding valve 15.

Incidentally, when the anti-clog fuel addition process is conducted in a state where the oxidation catalyst 13 has not reached its activation temperature (non-activated state), unburned fuel that was added adheres to the oxidation catalyst 13. Then, the activation temperature of the oxidation catalyst 13 is increased compared to a normal state before the unburned fuel adheres. As a result of being in the non-activated state for a long time, performance or catalyzing ability of the oxidation catalyst 13 is impaired. To address this, the electronic control unit 30 determines if the process for anti-clog fuel addition should be performed or not, depending on the activation state of the oxidation catalyst 13 (i.e., depending on if the oxidation catalyst 13 reached the activation temperature or not). That is, the electronic control unit 30 performs the anti-clog fuel addition on the condition that the oxidation catalyst 13 completely reached the activation temperature (the oxidation catalyst 13 is completely activated).

The anti-clog fuel addition of the present embodiment will be described.

First, the electronic control unit 30 determines if the electronic control unit 30 performs the anti-clog fuel addition depending on the status of the engine 10. In this regard, the electronic control unit 30 of the present embodiment also serves as status determining means for determining the engine status at the starting of the engine 10.

When the engine 10 starts from the cold state (so-called cold start), the temperature of the distal end of the fuel adding valve 15 is low. Thus, there is no need for the anti-clog fuel addition. On the other hand, when the engine 10 is restarted after the engine 10 has been started and stopped, the temperature of the distal end of the fuel adding valve 15 is high. Thus, it is highly possible that there is need for the anti-clog fuel addition.

Then, the electronic control unit 30 determines if it will perform the anti-clog fuel addition based on the status of the engine 10 at the time of starting the engine 10. This determination of necessity of the anti-clog fuel addition is conducted at the time of starting the engine 10 when the electronic control unit 30 starts operation but combustion in the engine 10 has not been started yet. In this embodiment, the electronic control unit 30 determines the status of the engine 10 at the time of starting the engine 10 based on the temperature detected by the exhaust gas temperature sensor 18 and the temperature of cooling water for the engine 10 detected by the water temperature sensor 32. For example, at the time of starting the engine 10, if the temperature detected by the exhaust gas temperature sensor 18 and the temperature of cooling water for the engine 10 detected by the water temperature sensor 32 are substantially the same, the electronic control unit 30 determines that the engine 10 started from the cold state when the engine is cold. Then, based on this determination, the electronic control unit 30 determines that the anti-clog fuel addition at the time of determining the status of the engine 10 is not required.

Meanwhile, at the time of starting the engine 10, if the temperature detected by the exhaust gas temperature sensor 18 is higher than the temperature of cooling water for the engine 10 detected by the water temperature sensor 32, the electronic control unit 30 determines that this is a restart of the engine 10. Then, based on this determination, the electronic control unit 30 determines that the anti-clog fuel addition at the time of determining the status of the engine 10 is required.

Next, when the anti-clog fuel addition is required, the electronic control unit 30 estimates a required fuel addition amount that is required for the anti-clog fuel addition. Thus, the electronic control unit 30 of the present embodiment also serves as required fuel addition amount estimating means.

The required fuel addition amount is estimated based on engine rotational speed and a fuel injection amount. In the present embodiment, the required fuel addition amount is estimated using a map for calculating the required fuel addition amount in which the engine rotational speed and the fuel injection amount are associated with the required fuel addition amount per unit time. This map is predetermined experimentally based on the engine rotational speed and the fuel injection amount and stored in a ROM.

Next, the electronic control unit 30 sets a standard addition interval when the estimated required fuel addition amount is added at a plurality of divided amounts. For the fuel adding valve 15 that adds or injects fuel, an amount of fuel added at one time (referred to as "standard fuel addition amount" hereinafter) is predetermined. The standard fuel addition amount is set to a relatively smaller amount in an injectable scope based on the period when the fuel adding valve 15 is open and the fuel supply pressure of the fuel adding valve 15. Then, based on the standard fuel addition amount and the fuel supply pressure of the fuel adding valve 15, the electronic control unit 30 calculates the energizing period T of the fuel adding valve 15 that is required for injecting the standard fuel addition amount. The term "energizing period T" refers to a period during which the fuel adding valve 15 is open, i.e., a period from the opening of the fuel adding valve 15 to the closing of the fuel adding valve 15.

Then, the electronic control unit 30 calculates the standard addition interval by dividing the required fuel addition amount as described by the energizing period T (i.e., by deriving the standard fuel addition amount). The term "standard addition interval" refers to a time interval from the time when the fuel adding valve 15 is opened, then the standard fuel addition amount is added, the fuel adding valve 15 is closed and to the time when the fuel adding valve 15 is opened again.

Next, the electronic control unit 30 estimates if the oxidation catalyst 13 is in the activated state. Thus, the electronic control unit 30 serves as catalyst activation estimation means. The electronic control unit 30 constantly monitors the temperature detected by the exhaust gas temperature sensor 18, which is a representative value of the oxidation catalyst 13, and estimates from the detected temperature of the exhaust gas if the oxidation catalyst 13 is in an activated state or not. If the temperature of exhaust gas is within a predetermined scope, the electronic control unit 30 estimates that the oxidation catalyst 13 completely reached the activation temperature and is in an activated state. After this estimation that the oxidation catalyst 13 is in an activated state, the electronic control unit 30 performs a process of anti-clog fuel addition with use of the fuel adding valve 15 at the standard addition intervals as described above.

Meanwhile, if the temperature detected by the exhaust gas temperature sensor 18 is outside the predetermined scope, the electronic control unit 30 estimates that the oxidation catalyst 13 has not completely reached the activation temperature and has not been activated. After this estimation that the oxidation catalyst 13 has not been activated, the electronic control unit 30 performs a reduction control that prohibits the anti-clog fuel addition. The electronic control unit 30 continues the reduction control until the oxidation catalyst 13 has completely reached the activation temperature and is activated. After the oxidation catalyst 13 has completely reached the activation temperature and is activated, the electronic control unit 30 starts the anti-clog fuel addition.

A graph G1 in Fig. 1(b) represents the relationship of frequency of additions vs. time where it was determined that the anti-clog fuel addition was necessary, and the anti-clog fuel addition was performed while the oxidation catalyst 13 has not completely achieved the activation temperature. The time t0 is start timing of the anti-clog fuel addition in the graph G1. In the graphs in Fig. 1 (b), the axis of the abscissa is time and the axis of the ordinate is frequency of additions.

The graph G2 in Fig. 1(b) represents the relationship of frequency of additions vs. time where it was determined that the anti-clog fuel addition was necessary, but the anti-clog fuel addition was prohibited while the oxidation catalyst 13 has not completely achieved the activation temperature, and then the anti-clog fuel addition was performed thereafter. The time t1 is the start timing of the anti-clog fuel addition in the graph G2.

As illustrated in Fig. 1(b), the start time t1 in the anti-clog fuel addition represented by the graph G2 is delayed compared to the start time t0 in the anti-clog fuel addition represented by the graph G1 by prohibition of the anti-clog fuel addition. In the anti-clog fuel addition represented by the graph G2, fuel that is not added (non-added fuel) are generated during the period from the start time t0 to the start time t1. Such fuel that should be added during the same period in the anti-clog fuel addition represented by the graph G1.

In the present embodiment, the electronic control unit 30 stores in the RAM an amount of the non-added fuel that is generated during the period from the time when it is determined that the anti-clog fuel addition is necessary to the time when the anti-clog fuel addition is started (or when the oxidation catalyst 13 has completely reached the activation temperature). Moreover, when the temperature of exhaust gas falls within a predetermined scope (when the oxidation catalyst 13 completely reached the activation temperature), the electronic control unit 30 sums up amounts of the non-added fuel stored in the RAM to calculate a total amount of non-added fuel. According to the present embodiment, the electronic control unit 30 also serves as total non-added fuel amount calculating means calculate the total amount of non-added fuels by summing up the amounts of non-added fuels generated by prohibition of the anti-clog fuel addition.

In addition, when the temperature of exhaust gas falls within a predetermined scope (when the oxidation catalyst 13 completely reached the activation temperature), the electronic control unit 30 calculates the corrected fuel addition amount, which is a sum of the total amount of non-added fuels and the required fuel addition amount, and starts the anti-clog fuel addition with the corrected fuel addition amount.

In this respect, the electronic control unit 30 sets a corrected addition interval when the corrected fuel addition amount is added at a plurality of divided amounts. The corrected addition interval is calculated by dividing the corrected fuel addition per unit time by the energizing period T (standard fuel addition amount). The corrected addition interval is set shorter than the standard addition interval as described above. As illustrated in Fig. 1 (b), in the anti-clog fuel addition represented by the graph G2, the slope immediately after the start of the anti-clog fuel addition is greater compared to that of the anti-clog fuel addition represented by the Graph G1. Thus, the frequency or number of additions per unit time is greater.

In the exhaust gas purification apparatus, to prevent release of unexpected HC by due to excess fuel supplied in the anti-clog fuel addition beyond the performance of the oxidation catalyst 13, an upper limit of an amount of such supplied fuel (upper limit of a fuel addition amount) is set. By setting the upper limit of a fuel addition amount so that the sum of an amount of fuel from the fuel adding valve 15 and an HC component in the exhaust gas from a combustion chamber of the engine 10 does not exceed the ability of the oxidation catalyst 13 to treat the fuel, the upper limit for a fuel addition amount has an allowance with respect to the ability of the oxidation catalyst 13. The upper limit for a fuel addition amount is stored as a fixed value in the ROM.

Then, the electronic control unit 30 determines if the corrected fuel addition amount per unit time exceeds the upper limit of a fuel addition amount. If the determination is affirmative, the electronic control unit 30 sets a restricted addition interval that varies (is lengthened) from the corrected addition interval so that the corrected fuel addition amount per unit time remains below the corrected fuel addition amount per unit time. This restricted addition interval is longer than the corrected addition interval and shorter than the standard addition interval. Although the non-added fuel is generated by setting the restricted addition interval, the electronic control unit 30 stores this non-added fuel in the RAM. In addition, the electronic control unit 30 sums up non-added fuel stored in the RAM and adds the corrected fuel addition amount to reflect the result in the anti-clog fuel addition. By setting the restricted addition interval, the period of operation is extended compared to the anti-clog fuel addition with the corrected addition interval.

Meanwhile, if the corrected fuel addition amount per unit time does not exceed the upper limit of a fuel addition amount, the electronic control unit 30 performs the anti-clog fuel addition with the corrected addition interval.

Next, a procedure for anti-clog fuel addition performed by the electronic control unit 30 according to the present embodiment will be described.

As illustrated in Fig. 2, the electronic control unit 30 determines if the engine 10 starts from the cold state based on the temperature detected by the exhaust gas temperature sensor 18 and the temperature of cooling water for the engine 10 detected by the water temperature sensor 32 (step S11). If the determination is negative (NO in S11), the electronic control unit 30 determines if the temperature detected by the exhaust gas temperature sensor 18 is within a predetermined scope (step S12). Specifically, in step S12, the electronic control unit 30 determines if the oxidation catalyst 13 has reached the activation temperature (if the activation temperature is in an activated state) from the detected temperature of exhaust gas to estimate the activation status of the oxidation catalyst 13. On the other hand, if the determination in step S11 is affirmative (YES in step S11), the electronic control unit 30 ends the procedure.

When the determination in step S12 is negative (i.e., the oxidation catalyst 13 has not reached the activation temperature) (NO in step S12), the electronic control unit 30 controls the fuel adding valve 15 to prohibit the anti-clog fuel addition (to perform the reduction control) (step S13). Then, the electronic control unit 30 stores an amount for non-added fuel generated by the prohibition in the RAM (step S14) and proceeds to step S15.

When the determination in step S12 is affirmative (i.e., the oxidation catalyst 13 has reached the activation temperature) (YES in step S12), it is presumed that the engine 10 is restarted after being warmed up and that the temperature of the distal end of the fuel adding valve 15 is already high. Thus, the anti-clog fuel addition is highly needed. Accordingly, the electronic control unit 30 performs the anti-clog fuel addition set at standard addition interval (step S20).

In step S15, the electronic control unit 30 determines if the temperature detected by the exhaust gas temperature sensor 18 is within a predetermined scope. If the determination is affirmative (YES in step S15), the electronic control unit 30 sums up amounts of non-added fuel stored in the RAM to calculate a total amount of the non-added fuel (step S16). On the other hand, if the determination is negative (NO in step S15), the electronic control unit 30 proceeds to step S13.

Next to step S16, the electronic control unit 30 calculates the corrected fuel addition amount (step S17). Then, the electronic control unit 30 determines if the corrected fuel addition amount per unit time exceeds the upper limit of a fuel addition amount (step S18). If the determination is affirmative (YES in step S18), the electronic control unit 30 performs the anti-clog fuel addition set at the restricted addition interval (step S19). On the other hand, if the determination in step S18 is negative (NO in step S18), the electronic control unit 30 performs the anti-clog fuel addition set at the corrected addition interval (step S21).

The above embodiment has the following advantages.
(1) When the oxidation catalyst 13 has not reached the activation temperature (when the oxidation catalyst 13 has not been activated), the electronic control unit 30 controls the fuel adding valve 15 to prohibit the anti-clog fuel addition even when the temperature of the distal end of the fuel adding valve 15 is high and the anti-clog fuel addition needs to be conducted. Thus, adherence of unburned fuel that was added for the anti-clog fuel addition to the oxidation catalyst 13 is prevented and thus, increase in the activation temperature of the oxidation catalyst 13 is prevented. Thus, impairment of the performance of the oxidation catalyst 13 due to the anti-clog fuel addition can be prevented.
(2) During the period when the anti-clog fuel addition is prohibited, the electronic control unit 30 stores an amount of non-added fuel that was generated during the prohibition. Then, when the oxidation catalyst 13 has reached the activation temperature and is activated, the electronic control unit 30 causes the fuel adding valve 15 to add the increased amount of fuel that is greater than the required fuel addition amount required for the anti-clog fuel addition. Thus, even if the anti-clog fuel addition is prohibited in a situation where the anti-clog fuel addition should be conducted, anti-clog function can be recovered after the starting of the anti-clog fuel addition.
(3) During the period when the anti-clog fuel addition is prohibited, the electronic control unit 30 stores an amount of non-added fuel that was generated during the prohibition. Then, when the oxidation catalyst 13 has reached the activation temperature, the electronic control unit 30 causes the fuel adding valve 15 to add the corrected fuel addition amount, which is the sum of the total amount of non-added fuels and the required fuel addition amount for a short period. Thus, even if the anti-clog fuel addition is prohibited in a situation where the anti-clog fuel addition should be conducted, the anti-clog function can be recovered quickly after the starting of the anti-clog fuel addition by adding the fuel intensively.
(4) During the period when the anti-clog fuel addition is prohibited, the electronic control unit 30 stores each amount of non-added fuel that was generated during the prohibition. Then, when the oxidation catalyst 13 has reached the activation temperature, the electronic control unit 30 calculates the corrected fuel addition amount from the total amount of non-added fuel and the required fuel addition amount. Further, the electronic control unit 30 makes the correction so that the corrected fuel addition amount per unit time does not exceed an upper limit for the fuel addition amount. Thus, it is prevented for an amount of fuel supplied by the anti-clog fuel addition to exceed the amount the oxidation catalyst 13 can process. As a result, in the anti-clog fuel addition, generation of smoke due to stagnation of fuel or deterioration of the oxidation catalyst 13 due to excess increase in the temperature of the oxidation catalyst 13 can be prevented. Since the fuel supply does not exceed the upper limit of the catalyzing ability of the oxidation catalyst 13, excess fuel addition can be prevented.
(5) To prevent clogging of the fuel adding valve 15, rather than adding a large amount of fuel per unit time, adding small amounts of fuels at short intervals is effective. In the present embodiment, the corrected fuel addition amount is added at a plurality of divided amounts by dividing the corrected fuel addition amount by the standard fuel addition amount of the fuel adding valve 15. Moreover, a larger amount of fuel is added for a short period immediately after the start of the anti-clog fuel addition by shortening the intervals. Thus, the clogging of the fuel adding valve 15 is effectively prevented.
(6) When the engine 10 starts from the cold state, the temperature of the distal end of the fuel adding valve 15 is low. Thus, the anti-clog fuel addition is less needed. On the other hand, if the engine 10 is restarted after being warmed up, the temperature of the distal end of the fuel adding valve 15 is already high. Thus, anti-clog fuel addition is needed more. Then, the electronic control unit 30 determines the status of the engine 10 at the time of starting to determine if the anti-clog fuel addition should be performed or not. Accordingly, fuel waste due to execution of the anti-clog fuel addition is prevented when the anti-clog fuel addition is unnecessary such as times when the engine 10 is cold.

In the above embodiment, the electronic control unit 30 controls for proper performance of the reduction control for prohibiting the anti-clog fuel addition when the oxidation catalyst 13 has not reached the activation temperature and has not been activated. In another example, not part of the invention, even when the oxidation catalyst 13 has not reached the activation temperature and is in a non-activated state, when it is determined that the anti-clog fuel addition is necessary, the anti-clog fuel addition is started at the determination point. In this regard, the reduction control for restricting the required fuel addition amount per unit time may be performed. Specifically, the longer addition interval is set from the start of the anti-clog fuel addition to reduce the number of additions in the standard fuel addition amount per unit time. Alternatively, a fuel addition amount at one time may be reduced without changing the addition interval from the start of the anti-clog fuel addition.

In the above example, the electronic control unit 30 calculates the corrected fuel addition interval by dividing the corrected fuel addition amount by the energizing period T of the fuel adding valve 15 to perform the anti-clog fuel addition set at the corrected addition intervals. Thus, fuel is added frequently at short intervals. In another example, the electronic control unit 30 may control the fuel adding valve 15 so that the fuel adding valve 15 injects the corrected fuel addition amount per unit time.

In the above example, a exhaust gas temperature sensor 18 is provided in the exhaust passage 12 at the position upstream of the oxidation catalyst 13 and downstream of the fuel adding valve 15 and the temperature detected by the exhaust gas temperature sensor 18 is used to estimate if the oxidation catalyst 13 is activated or not. In another example, the information detected by the exhaust gas temperature sensor provided in the exhaust passage 12 at the position downstream of the oxidation catalyst 13 may be used to estimate if the oxidation catalyst 13 is activated or not. In this case, such exhaust gas temperature sensor provided at the position downstream of the oxidation catalyst 13 serves as catalyst activation estimation means.

In the above example, a exhaust gas temperature sensor 18 is provided in the exhaust passage 12 at the position upstream of the oxidation catalyst 13 and downstream of the fuel adding valve 15 and the temperature detected by the exhaust gas temperature sensor 18 is used to estimate if the oxidation catalyst 13 is activated or not. In another example, in addition to the exhaust gas temperature sensor 18, another exhaust gas temperature sensor is provided in the exhaust passage 12 at the position downstream of the oxidation catalyst 13 to use the difference between the temperature of exhaust gas at the position upstream of the oxidation catalyst 13 and the temperature of exhaust gas at the position downstream of the oxidation catalyst 13 to estimate if the oxidation catalyst 13 is activated or not. In this case the two exhaust gas temperature sensors on the both sides of the oxidation catalyst 13 serve as catalyst activation estimation means.

In the above embodiment, the oxidation catalyst 13 is used as a catalyst. Other than that, for example, a NOx storage reduction catalyst may be used as an exhaust purifying catalyst.

In the above embodiment, the oxidation catalyst 13 is used as an exhaust purifying catalyst. Other than that, for example, a filter carrying an oxidation catalyst may be used.

The present invention may be applied not only to an exhaust gas purification apparatus for a diesel engine but also an exhaust gas purification apparatus for a gasoline engine.

## Claims

1. An exhaust gas purification apparatus for an internal combustion engine, wherein an exhaust purifying catalyst is provided in an exhaust passage (12) for the engine and a fuel adding valve (15) is provided in the exhaust passage (12) at a position upstream of the exhaust purifying catalyst, wherein the exhaust gas purification apparatus includes anti-clog means configured to cause the fuel adding valve (15) to perform anti-clog fuel addition for injecting fuel in order to reduce a temperature of a distal end of the fuel adding valve (15), thereby preventing clogging of the fuel adding valve (15), wherein
the exhaust gas purification apparatus is configured to cause the fuel adding valve (15) to perform fuel addition for injecting fuel in order to regenerate a filter (14), when a predetermined amount of particulate matter has accumulated in the filter (14),
the anti-clog means is configured to perform anti-clog fuel addition at a timing other than a time of performing fuel addition for injecting fuel in order to regenerate the filter (14), wherein the exhaust gas purification apparatus comprises:
catalyst activation estimation means configured to estimate if the exhaust purifying catalyst is in an activated state or not;
wherein the exhaust gas purification apparatus is configured such that, in a case where the anti-clog fuel addition should be conducted with a required fuel addition amount, if the catalyst activation estimation means estimates that the exhaust purifying catalyst has not been activated, the anti-clog means performs reduction control in which a fuel addition amount per unit time is restricted or the anti-clog fuel addition is prohibited until the exhaust purifying catalyst is activated, and
the exhaust gas purification apparatus being **characterized in that**
the exhaust gas purification apparatus is configured such that, when the exhaust purifying catalyst is activated after the reduction control was performed, the anti-clog means increases the fuel addition amount for a next anti-clog fuel addition to an amount greater than the required fuel addition amount.

2. The exhaust gas purification apparatus for an internal combustion engine according to claim 1, **characterized in that** the exhaust gas purification apparatus further comprises:
required fuel addition amount estimating means for estimating the required fuel addition amount required for the anti-clog fuel addition; and
total non-added fuel amount calculating means for calculating total non-added fuel amount by summing up amounts of non-added fuels generated by prohibition of the anti-clog fuel addition,
wherein, when the exhaust purifying catalyst is activated after the reduction control was performed, the anti-clog means controls the fuel adding valve (15) to add a corrected fuel addition amount, wherein the corrected fuel addition amount is a sum of the required fuel addition amount and the total amount of non-added fuels.

3. The exhaust gas purification apparatus for an internal combustion engine according to claim 2, **characterized in that** the anti-clog means controls a corrected fuel addition amount per unit time so that the corrected fuel addition amount per unit time does not exceed an upper limit for a fuel addition amount, wherein the upper limit of a fuel addition amount is set not to reduce the catalyzing ability of the exhaust purifying catalyst.

4. The exhaust gas purification apparatus for an internal combustion engine according to any one of claims 1 to 3, **characterized in that** the exhaust gas purification apparatus further comprises:
status determining means for determining the engine status at the starting of the engine,
wherein, if the engine status determined by the status determining means is an engine restart after being warmed up, the anti-clog means performs the anti-clog fuel addition.

5. The exhaust gas purification apparatus for an internal combustion engine according to any one of claims 1 to 4, **characterized in that** the exhaust purifying catalyst is an oxidation catalyst (13).

6. The exhaust gas purification apparatus for an internal combustion engine according to any one of claims 1 to 5, **characterized in that** the internal combustion engine is a diesel engine (10).

## Patentansprüche

1. Abgasreinigungsgerät für eine Brennkraftmaschine, wobei ein Abgasreinigungskatalysator in einem Abgasdurchgang (12) für die Kraftmaschine vorgesehen ist und ein Kraftstoffzugabeventil (15) in dem Abgasdurchgang (12) an einer Position stromaufwärts des Abgasreinigungskatalysators vorgesehen ist, wobei das Abgasreinigungsgerät eine Anti-Verstopfungseinrichtung hat, die gestaltet ist, um zu bewirken, dass das Kraftstoffzugabeventil (15) eine Anti-Verstopfungskraftstoffzugabe zum Einspritzen von Kraftstoff, um eine Temperatur eines distalen Endes des Kraftstoffzugabeventils (15) zu verringern, durchführt, wodurch ein Verstopfen des Kraftstoffzugabeventils (15) verhindert wird, wobei
das Abgasreinigungsgerät gestaltet ist, um zu bewirken, dass das Kraftstoffzugabeventil (15) eine Kraftstoffzugabe zum Einspritzen von Kraftstoff, um einen Filter (14) zu regenerieren, durchführt, wenn sich eine vorbestimmte Menge von Partikeln in dem Filter (14) angesammelt hat,
die Anti-Verstopfungseinrichtung gestaltet ist, um eine Anti-Verstopfungskraftstoffzugabe zu einer Zeitabstimmung durchzuführen, die anders als eine Zeit des Durchführens einer Kraftstoffzugabe zum Einspritzen von Kraftstoff, um den Filter (14) zu regenerieren, ist, wobei das Abgasreinigungsgerät folgendes aufweist:
eine Katalysatoraktivierungsschätzeinrichtung, die gestaltet ist, um zu schätzen, ob der Abgasreinigungskatalysator in einem aktivierten Zustand ist oder nicht;
wobei das Abgasreinigungsgerät derart gestaltet ist, dass, in einem Fall, in dem die Anti-Verstopfungskraftstoffzugabe mit einer erforderten Kraftstoffzugabemenge ausgeführt werden sollte, falls die Katalysatoraktivierungsschätzeinrichtung schätzt, dass der Abgasreinigungskatalysator nicht aktiviert worden ist, die Anti-Verstopfungseinrichtung eine Verringerungssteuerung durchführt, in der eine Kraftstoffzugabemenge pro Zeiteinheit beschränkt ist oder die Anti-Verstopfungskraftstoffzugabe verhindert ist, bis der Abgasreinigungskatalysator aktiviert ist, und
das Abgasreinigungsgerät **dadurch gekennzeichnet ist, dass**
das Abgasreinigungsgerät derart gestaltet ist, dass, wenn der Abgasreinigungskatalysator aktiviert wird, nachdem die Verringerungssteuerung durchgeführt wurde, die Anti-Verstopfungseinrichtung die Kraftstoffzugabemenge für eine nächste Anti-Verstopfungskraftstoffzugabe auf eine Menge erhöht, die größer ist als die erforderte Kraftstoffzugabemenge.

2. Abgasreinigungsgerät für eine Brennkraftmaschine nach Anspruch 1, **dadurch gekennzeichnet, dass** das Abgasreinigungsgerät des Weiteren folgendes aufweist:
eine Einrichtung zum Schätzen einer erforderten Kraftstoffzugabemenge, um die erforderte Kraftstoffzugabemenge, die für die Anti-Verstopfungskraftstoffzugabe erfordert ist, zu schätzen; und
eine Einrichtung zum Berechnen einer gesamten, nicht zugegebenen Kraftstoffmenge, um eine gesamte, nicht zugegebene Kraftstoffmenge durch Aufsummieren von Mengen von nicht zugegebenen Kraftstoffen, die durch eine Verhinderung der Anti-Verstopfungskraftstoffzugabe erzeugt werden, zu berechnen,
wobei, wenn der Abgasreinigungskatalysator aktiviert wird, nachdem die Verringerungssteuerung durchgeführt wurde, die Anti-Verstopfungseinrichtung das Kraftstoffzugabeventil (15) steuert, um eine korrigierte Kraftstoffzugabemenge zuzugeben, wobei die korrigierte Kraftstoffzugabemenge eine Summe aus der erforderten Kraftstoffzugabemenge und der gesamten Menge von nicht zugegebenen Kraftstoffen ist.

3. Abgasreinigungsgerät für eine Brennkraftmaschine nach Anspruch 2, **dadurch gekennzeichnet, dass** die Anti-Verstopfungseinrichtung eine korrigierte Kraftstoffzugabemenge pro Zeiteinheit so steuert, dass die korrigierte Kraftstoffzugabemenge pro Zeiteinheit eine Obergrenze für eine Kraftstoffzugabemenge nicht übersteigt, wobei die Obergrenze einer Kraftstoffzugabemenge festgelegt ist, um die Katalysationsfähigkeit des Abgasreinigungskatalysators nicht zu verringern.

4. Abgasreinigungsgerät für eine Brennkraftmaschine nach einem der Ansprüche 1 bis 3, **dadurch gekennzeichnet, dass** das Abgasreinigungsgerät des Weiteren folgendes aufweist:
eine Statusbestimmungseinrichtung zum Bestimmen des Kraftmaschinenstatus zu der Zeit des Startens der Kraftmaschine,
wobei, falls der Kraftmaschinenstatus, der durch die Statusbestimmungseinrichtung bestimmt wird, ein Kraftmaschinenwiederstart nach einem Aufwärmen ist, die Anti-Verstopfungseinrichtung die Anti-Verstopfungskraftstoffzugabe durchführt.

5. Abgasreinigungsgerät für eine Brennkraftmaschine nach einem der Ansprüche 1 bis 4, **dadurch gekennzeichnet, dass** der Abgasreinigungskatalysator ein Oxidationskatalysator (13) ist.

6. Abgasreinigungsgerät für eine Brennkraftmaschine nach einem der Ansprüche 1 bis 5, **dadurch gekennzeichnet, dass** die Brennkraftmaschine eine Dieselkraftmaschine (10) ist.

## Revendications

1. Appareil de purification de gaz d'échappement pour un moteur à combustion interne, dans lequel un catalyseur de purification d'échappement est prévu dans un passage d'échappement (12) pour le moteur et une vanne d'ajout de carburant (15) est prévue dans le passage d'échappement (12) à une position en amont du catalyseur de purification d'échappement, dans lequel l'appareil de purification de gaz d'échappement comprend des moyens anti-encrassement configurés pour amener la vanne d'ajout de carburant (15) à effectuer un ajout de carburant anti-encrassement pour injecter du carburant afin de réduire une température d'une extrémité distale de la vanne d'ajout de carburant (15), évitant de ce fait l'encrassement de la vanne d'ajout de carburant (15), dans lequel
l'appareil de purification de gaz d'échappement est configuré pour amener la vanne d'ajout de carburant (15) à effectuer un ajout de carburant pour injecter du carburant afin de régénérer un filtre (14), lorsqu'une quantité prédéterminée de matière particulaire s'est accumulée dans le filtre (14),
les moyens anti-encrassement sont configurés pour effectuer un ajout de carburant anti-encrassement à un instant autre qu'un instant d'exécution de l'ajout de carburant pour injecter du carburant afin de régénérer le filtre (14), dans lequel l'appareil de purification de gaz d'échappement comprend :
des moyens d'estimation d'activation de catalyseur configurés pour estimer si le catalyseur de purification d'échappement est dans un état activé ou non ;
dans lequel l'appareil de purification de gaz d'échappement est configuré de sorte que, dans un cas où l'ajout de carburant anti-encrassement devrait être effectué avec une quantité d'ajout de carburant requise, si les moyens d'estimation d'activation de catalyseur estiment que le catalyseur de purification d'échappement n'a pas été activé, les moyens anti-encrassement effectuent une commande de réduction dans laquelle une quantité d'ajout de carburant par temps unitaire est limitée ou l'ajout de carburant anti-encrassement est interdit jusqu'à ce que le catalyseur de purification d'échappement soit activé, et
l'appareil de purification de gaz d'échappement étant **caractérisé en ce que**
l'appareil de purification de gaz d'échappement est configuré de sorte que, lorsque le catalyseur de purification de gaz d'échappement est activé après que la commande de réduction a été effectuée, les moyens anti-encrassement augmentent la quantité d'ajout de carburant pour un ajout de carburant anti-encrassement suivant à une quantité supérieure à la quantité d'ajout de carburant requise.

2. Appareil de purification de gaz d'échappement pour un moteur à combustion interne selon la revendication 1, **caractérisé en ce que** l'appareil de purification de gaz d'échappement comprend en outre :
des moyens d'estimation de quantité d'ajout de carburant requise pour estimer la quantité d'ajout de carburant requise qui est requise pour l'ajout de carburant anti-encrassement ; et
des moyens de calcul de quantité totale de carburant non ajouté pour calculer la quantité de carburant non ajouté totale en additionnant les quantités de carburants non ajoutés générées par l'interdiction de l'ajout de carburant anti-encrassement,
dans lequel, lorsque le catalyseur de purification d'échappement est activé après que la commande de réduction a été effectuée, les moyens anti-encrassement commandent la vanne d'ajout de carburant (15) pour ajouter une quantité d'ajout de carburant corrigée, dans lequel la quantité d'ajout de carburant corrigée est une somme de la quantité d'ajout de carburant requise et de la quantité totale de carburants non ajoutés.

3. Appareil de purification de gaz d'échappement pour un moteur à combustion interne selon la revendication 2, **caractérisé en ce que** les moyens anti-encrassement commandent une quantité d'ajout de carburant corrigée par temps unitaire de sorte que la quantité d'ajout de carburant corrigée par temps unitaire ne dépasse pas une limite supérieure pour une quantité d'ajout de carburant, dans lequel la limite supérieure d'une quantité d'ajout de carburant est fixée de manière à ne pas réduire la capacité de catalyse du catalyseur de purification d'échappement.

4. Appareil de purification de gaz d'échappement pour un moteur à combustion interne selon l'une quelconque des revendications 1 à 3, **caractérisé en ce que** l'appareil de purification de gaz d'échappement comprend en outre :
des moyens de détermination d'état pour déterminer l'état du moteur au démarrage du moteur,
dans lequel, si l'état du moteur déterminé par les moyens de détermination d'état est un redémarrage du moteur alors que le moteur est chaud, les moyens anti-encrassement effectuent l'ajout de carburant anti-encrassement.

5. Appareil de purification de gaz d'échappement pour un moteur à combustion interne selon l'une quelconque des revendications 1 à 4, **caractérisé en ce que** le catalyseur de purification d'échappement est un catalyseur d'oxydation (13).

6. Appareil de purification de gaz d'échappement pour un moteur à combustion interne selon l'une quelconque des revendications 1 à 5, **caractérisé en ce que** le moteur à combustion interne est un moteur diésel (10).
